# FASCICULE DE BREVET EUROPEEN

(11) **EP 0 576 352 B1**
(45) Date de publication et mention de la délivrance du brevet: **19.09.2001**
(21) Numéro de dépôt: 93401605.6
(22) Date de dépôt: 22.06.1993
(51) Int. Cl.: H05B 6/02

(54) **Dispositif de chauffage inductif homogène de produits plats métalliques au défilé**
Durch Laufanlage zum induktiven Erwärmen eines Metallbandes
Apparatus for homogenous induction heating of metal strip as it passes

(30) Priorité: 24.06.1992 FR 9207741
(43) Date de publication de la demande: 29.12.1993
(73) Titulaire: Société CELES, F-91002 Evry Cédex (FR)
(72) Inventeur: Couffet, Claude, F-93100 Montreuil (FR); Hellegouarc'h, Jean, F-94170 Le Perreux/Marne (FR); Prost, Gérard, F-94260 Fresnes (FR); Uring, Jean Camille, F-68000 Colmar (FR)
(74) Mandataire: Armengaud Ainé, Alain

(56) Documents cités:
- DE-C- 903 847
- FR-A- 1 034 097
- FR-A- 1 235 881
- FR-A- 2 495 752
- US-A- 4 678 883

## Description

La présente invention concerne un procédé de chauffage au défilé, par induction, de produits plats notamment métalliques.

A l'heure actuelle, le chauffage au défilé par induction de produits plats est réalisé à l'aide de bobinages qui sont disposés de façon à entourer le produit à réchauffer en créant un champ magnétique parallèle à la surface extérieure de ce produit selon la direction de défilement (flux longitudinal). Dans ces installations de chauffage par induction, les dimensions intérieures de chaque bobinage dépendent de la forme du produit et de ses éventuels défauts géométriques. Lors de la conception des bobinages, on est donc amené à tenir compte de ces impératifs et il en résulte un sur-dimensionnement intérieur du bobinage par rapport au volume à chauffer, ce qui se traduit par une faible efficacité du chauffage, une diminution du rendement électrique et par conséquent, par une augmentation de la taille des installations de chauffage par induction. Par ailleurs, dans ces installations connues, le produit est "prisonnier" du bobinage étant donné qu'il défile à l'intérieur des bobinages fixes.

En revanche, dans ces installations, on obtient une distribution en anneau des courants induits qui enlacent le produit en déplacement continu, ce qui se traduit par un échauffement dont l'homogénéité de répartition est généralement considérée comme satisfaisante.

Selon une autre solution connue pour le chauffage au défilé par induction de produits métalliques plats, on créé un champ magnétique perpendiculaire aux grandes faces du produit à chauffer selon la technique dite du "flux transverse en phase". Dans ce mode de mise en oeuvre, on dispose deux bobinages de part et d'autre du produit à réchauffer, en regard de chacune des faces de ce dernier, ces bobinages étant alimentés à une fréquence telle que le champ magnétique soit traversant. Dans les installations mettant en oeuvre cette technique connue, la distance entre les bobinages (qui sont mécaniquement désolidarisés l'un de l'autre) et le produit à réchauffer peut être réduite à un strict minimum, ce qui permet d'obtenir une efficacité accrue du chauffage par induction et une amélioration du rendement électrique. En outre, dans ces installations, le produit à réchauffer n'est pas prisonnier de l'inducteur, ce qui permet d'intervenir sans difficulté en cas de perturbations dans le déroulement du processus de chauffage au défilé.

Cependant, dans ces installations connues, notamment divulguées par le document FR-A-1 034 097 dont on connaît un dispositif de chauffage par induction de pièces de volume important, les inducteurs étant alimentés par un courant alternatif à haute fréquence qui génère des champs magnétiques en opposition de phase conduisant à une distribution en boucle des courants induits dans le volume de la pièce, la distribution en boucle des courants induits ne permet généralement pas d'atteindre une homogénéité du chauffage qui soit satisfaisante.

Compte tenu des inconvénients des solutions selon l'état antérieur de la technique rappelé ci-dessus, la présente invention se propose d'apporter une solution originale en réalisant un procédé de chauffage par induction conduisant à une distribution en anneau des courants induits dans le produit à chauffer, ce qui assure ainsi un échauffement de ce produit avec une homogénéité de répartition satisfaisante et la possibilité de régler la position des bobinages de l'inducteur, par rapport au produit, ce qui améliore l'efficacité du chauffage ainsi que la sécurité.

En conséquence, la présente invention concerne un procédé de chauffage au défilé par induction de produits métalliques plats tel que défini dans la revendication unique.

D'autres caractéristiques et avantages de la presente invention ressortiront de la description faite ci-après en référence aux dessins annexés qui en illustrent un exemple de réalisation dépourvu de tout caractère limitatif. Sur les dessins :
- la figure 1 est une vue schématique en coupe axiale verticale d'un dispositif de chauffage par induction utilisé dans le procédé selon l'invention :
- la figure 2 est une vue en perspective de ce même dispositif et ;
- la figure 3 représente une armature d'un inducteur de chauffage selon une variante.

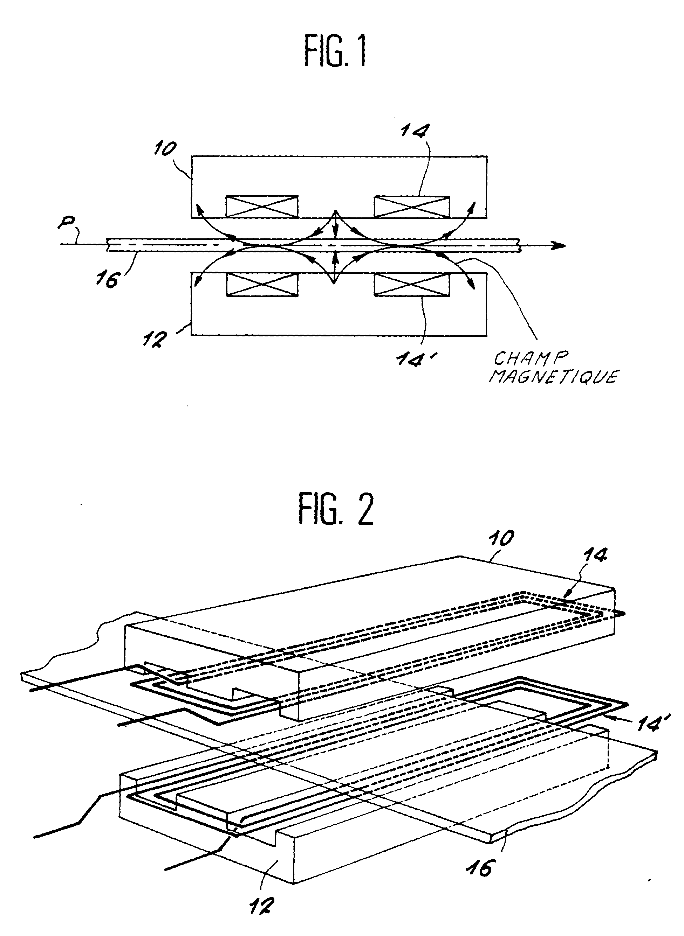

En se référant aux dessins, et plus particulièrement aux figures 1 et 2, on voit que le dispositif de chauffage par induction utilisé dans le procédé selon la présente invention comprend, dans cet exemple de réalisation non limitatif deux armatures magnétiques respectivement 10 et 12 pourvues de bobinages électriques tels que 14, 14', ces armatures étant placées de part et d'autre des grandes faces du produit 16 à chauffer.

Selon l'invention, chacune des armatures 10, 12 est alimentée à l'aide d'un courant alternatif monophasé dont la fréquence est choisie de manière que la profondeur de pénétration des courants induits dans le produit 16 à chauffer soit inférieure à la demi-épaisseur de ce produit. Comme on l'a représenté sur la figure 1, cette caractéristique permet d'obtenir une zone neutre dans laquelle le champ magnétique est nul, cette zone neutre s'étendant de part et d'autre du plan médian central P, parallèle aux grandes faces du produit 16 et qui à la limite se confond avec ce plan dans lequel il n'existe aucun courant induit et, cela jusqu'au voisinage des rives du produit 16.

Selon la présente invention, on réalise une distribution en anneau des courants induits de façon à obtenir un échauffement dont l'homogénéité de répartition est satisfaisante. Cette fermeture en anneau des courants induits dans les grandes faces par les petites faces du produit 16 à réchauffer est obtenu en annulant la composante du champ magnétique tangent à la petite face et orthogonal au plan médian P défini ci-dessus. Selon l'invention, ce résultat est atteint en alimentant les inducteurs 10-12, disposés symétriquement par rapport au plan médian P, de façon que les champs magnétiques générés soient en opposition de phase.

On notera que grâce aux caractéristiques de la présente invention décrites ci-dessus, la distribution des courants induits et donc l'homogénéité du chauffage ne sont pas influencées par la largeur du produit 16 dès lors que la surface active de l'inducteur s'étend sur une largeur supérieure à celle du produit, le plus large, devant être chauffé par le procédé selon l'invention.

Dans le procédé de chauffage par induction selon l'invention, tel que décrit ci-dessus, les deux armatures 10 et 12 sont mécaniquement indépendantes l'une de l'autre. Il en résulte qu'il est possible de régler à toute valeur requise leur distance respective par rapport au produit 16 à réchauffer, le dispositif utilisé constituant donc en outre un inducteur "ouvert" qui peut être retiré même en présence du produit à chauffer, ce qui se traduit par une amélioration considérable sur le plan de l'efficacité et de la sécurité.

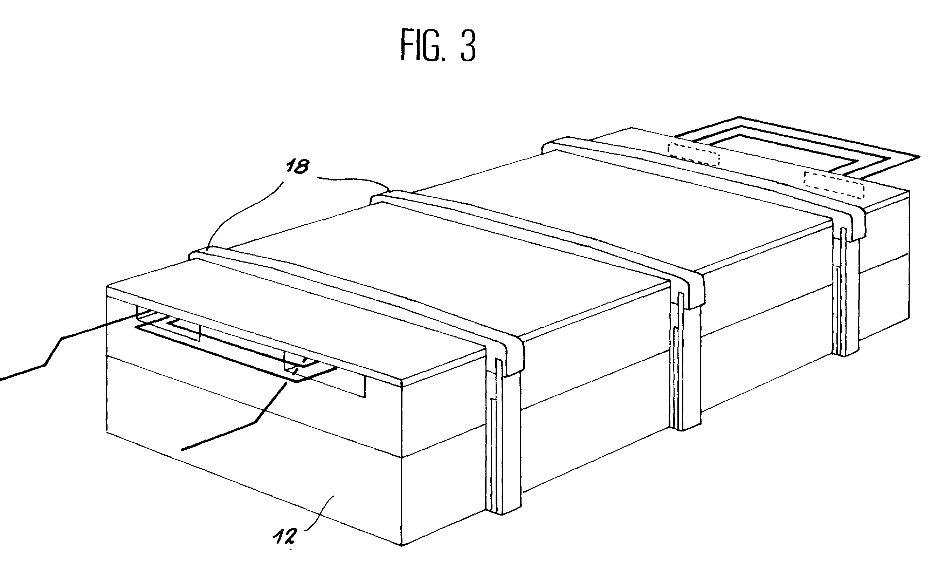

Chacune des armatures telles que 10-12 peut aussi être munie sur sa face extérieure (voir la figure 3) d'un système de ski tel que 18 intégré à la structure de l'inducteur permettant de protéger cet inducteur, et plus particulièrement les écrans thermiques, des chocs éventuels provenant des irrégularités de surface ou des défauts des produits 16 à chauffer. Le nombre des skis est choisi en fonction de la longueur de l'inducteur.

Outre les avantages déjà mentionnés ci-dessus notamment une bonne homogénéité de la répartition de l'échauffement du produit, un bon rendement électrique, une efficacité accrue du chauffage et une meilleure sécurité, apportés par le procédé objet de la présente invention, on peut en outre citer les avantages supplémentaires ci-après :
- puissance spécifique élevée, et
- compacite du dispositif de chauffage utilisé permettant son installation entre les rouleaux des tables d'attente dans une installation de traitement de produits métalliques en bande.

Il demeure bien entendu que la présente invention n'est pas limitée aux exemples de réalisation décrits et/ou représentés ici, mais qu'elle en englobe toutes les variantes, dans la mesure où est respectée l'étendue de protection de la revendication.

## Revendications

1. Procédé de chauffage au défilé par induction de produits métalliques plats à l'aide d'inducteurs constitués chacun d'un bobinage électrique (14, 14') prévu sur une armature magnétique (10, 12), la surface active de chaque inducteur s'étendant sur une largeur qui est supérieure à celle du produit le plus large devant être chauffé, lesdits bobinages (14, 14') étant alimentés en courant alternatif monophasé et étant disposés de part et d'autre des grandes faces du produit à chauffer, lesdits produits se déplaçant de façon continue entre lesdits bobinages, les inducteurs étant mécaniquement indépendants l'un de l'autre et étant disposés symétriquement par rapport au plan médian (P) du produit, parallèle aux grandes faces du produit, de façon que les champs magnétiques générés par ce type d'alimentation et de configuration des bobinages (14, 14') soient en opposition de phase, **caractérisé en ce que** l'alimentation en courant alternatif monophasé desdits bobinages (14, 14') se fait avec une fréquence qui est déterminée de manière à ce que la profondeur de pénétration des courants induits soit inférieure à la demi-épaisseur et en même temps sensiblement égale à la demi-épaisseur du produit à chauffer (16), et en ce que les champs magnétiques en opposition de phase conduisent à une distribution en anneau des courants induits dans le produit à réchauffer (16).

## Patentansprüche

1. Verfahren zum Durchlauferwärmen flacher Metallerzeugnisse durch Induktion mittels Induktionsspulen, die jeweils aus einer an einer Magneteinrichtung (10, 12) vorgesehenen elektrischen Wicklung (14, 14') bestehen, wobei die aktive Fläche jeder Induktionsspule sich über eine Breite erstreckt, die größer als diejenige des breitesten Erzeugnisses, das erwärmt werden soll, ist, an die Wicklungen (14, 14'), die auf beiden Seiten der großen Flächen des zu erwärmenden Erzeugnisses angeordnet sind, ein Einphasenwechselstrom angelegt ist, die Erzeugnisse sich zwischen diesen Wicklungen kontinuierlich vorwärtsbewegen, die Induktionsspulen voneinander mechanisch unabhängig und in Bezug auf die Mittenebene (P) des Erzeugnisses parallel zu dessen großen Seiten derart symmetrisch angeordnet sind, dass die Magnetfelder, die von diesem Typ einer Stromversorgung und Gestaltung der Wicklungen (14, 14') erzeugt werden, gegenphasig sind, **dadurch gekennzeichnet, dass** das Anlegen des Einphasenwechselstroms an die Wicklungen (14, 14') mit einer Frequenz erfolgt, die derart festgelegt wird, dass die Eindringtiefe der induzierten Ströme kleiner als die Hälfte der Dicke und gleichzeitig etwa gleich der Hälfte der Dicke des zu erwärmenden Erzeugnisses (16) ist, und dass die gegenphasigen Magnetfelder in dem zu erwärmenden Erzeugnis (16) eine ringförmige Verteilung der induzierten Ströme bewirken.

## Claims

1. Process for induction heating of flat metallic products as they pass using inductors each consisting of an electric coil (14, 14') provided on a magnetic armature (10, 12), the active surface of each inductor extending over a width greater than that of the widest product to be heated, said coils (14, 14') being supplied with monophase alternating current and being disposed on either side of the large faces of the product to be heated, said products travelling continuously between said coils, the inductors being mechanically independent of one another and being disposed symmetrically about the median plane (P) of the product, parallel to the large faces of the product, so that the magnetic fields generated by this type of supply and configuration of the coils (14, 14') is in phase opposition, **characterised in that** the supply of monophase alternating current to said coils (14, 14') is provided at a frequency which is determined in such a way that the depth of penetration of the induced currents is smaller than half the thickness and at the same time substantially equal to half the thickness of the product to be heated (16), and in that the magnetic fields in phase opposition lead to an annular distribution of the induced currents in the product to be heated (16).
